## Europäisches Patentamt
## European Patent Office
## Office européen des brevets

(19)

(11) Numéro de publication: **0 163 587**
**B1**

(12)

# FASCICULE DE BREVET EUROPÉEN

(45) Date de publication du fascicule du brevet:
15.02.89

(51) Int. Cl.⁴: **A 01 D  34/66**, A 01 D  43/10

(21) Numéro de dépôt: **85440022.3**

(22) Date de dépôt: **28.03.85**

(54) Faucheuse.

(30) Priorité: **12.04.84  FR 8405955**

(43) Date de publication de la demande:
**04.12.85 Bulletin 85/49**

(45) Mention de la délivrance du brevet:
**15.02.89 Bulletin 89/7**

(84) Etats contractants désignés:
**AT BE DE GB IT NL SE**

(56) Documents cité:
**EP-A-0 060 600**
**EP-A-0 149 129**
**FR-A-1 559 242**
**FR-A-2 110 911**
**FR-A-2 294 625**
**FR-A-2 342 018**
**FR-A-2 386 247**
**GB-A-610 600**
**GB-A-1 201 938**
**US-A-2 753 674**
**US-A-4 099 364**

(73) Titulaire: **KUHN S.A., 4, Impasse des Fabriques,
F-67700 Saverne (FR)**

(72) Inventeur: **Ermacora, Rino, 5, rue de Monswiller
Ottersthal, F-67700 Saverne (FR)**
Inventeur: **Werner, Anton, Rue du Haut- Barr,
F-67700 Saverne (FR)**

LIBER, STOCKHOLM 1989

EP 0 163 587 B1

## Description

La présente invention concerne une faucheuse munie d'un corps qui comporte une structure intermédiaire à laquelle est lié un timon permettant la liaison de la faucheuse à un tracteur, deux groupes faucheurs qui comportent chacun un bâti fixé de manière démontable sur la structure intermédiaire de telle sorte qu'en vue de dessus un groupe faucheur s'étend d'un côté de la structure intermédiaire et l'autre groupe faucheur de l'autre côté de ladite structure intermédiaire, et des moyens d'entraînement entraînant les groupes faucheurs.

Une telle faucheuse est décrite dans le brevet US-A-2 753 674. Cette faucheuse est munie d'un certain nombre d'organes de coupe rotatifs, s'étendant suivant une rangée dirigée transversalement par rapport à la direction de travail. Ces organes de coupe font partie d'un corps qui se compose d'un élément central de chaque côté duquel s'étend un certain nombre d'éléments latéraux formant ainsi un groupe faucheur de chaque côté de l'élément central. Chaque élément comporte un châssis qui est lié au châssis de l'élément adjacent au moyen d'une articulation d'axe dirigé dans la direction de travail. De même, l'élément situé directement à côté de l'élément central est également lié au châssis de l'élément central au moyen d'une articulation d'axe dirigé dans la direction de travail. La faucheuse ainsi formée, comporte donc une structure centrale supportant elle-même des organes de coupe et deux groupes faucheurs dont l'un s'étend d'un côté de ladite structure centrale et dont l'autre s'étend de l'autre côté de cette structure centrale. Le bâti de chaque groupe faucheur qui est constitué par l'ensemble des châssis des éléments correspondants liés entre eux par les articulations d'axe dirigé dans la direction de travail, est donc déformable pour que chaque organe de coupe puisse suivre individuellement la configuration du sol qu'il doit faucher. De même, ce bâti est également fixé de manière articulée sur la structure centrale. Ces articulations entre les différents organes de coupe ont notamment nécessité un nombre très important de roues de support (deux par organe de coupe).

Cette faucheuse connue comporte le grand inconvénient d'avoir une fiabilité très incertaine. Ceci résulte en effet des nombreuses articulations que comporte le corps de cette faucheuse. De telles articulations sont à éviter sur des faucheuses de grande largeur de coupe. En effet, ces faucheuses sont des machines à très haut rendement qui sont destinées à fonctionner intensivement. Elles nécessitent donc une grande fiabilité. Or les articulations représentent toujours des points faibles dans un mécanisme, notamment dans une faucheuse, étant donné que ces articulations sont soumises à des charges extrêmement élevées qu'elles ne sont pas toujours aptes à encaisser. Du reste, ces articulations peuvent prendre au bout d'un certain temps de travail des jeux qui ne sont pas acceptables.

Ces nombreuses articulations renchérissent par ailleurs substantiellement le prix de la faucheuse car cela nécessite comme dit plus haut un grand nombre de roues de support, de même que des moyens d'entraînement et des moyens de mise en position de transport relativement complexes.

Le but de la présente invention est donc de créer une faucheuse qui soit d'un prix raisonnable, dont le corps soit bien apte à absorber sans dommage les sollicitations rencontrées au travail et qui, bien que possédant deux groupes faucheurs, réalise un travail continu sur toute la largeur de la machine sans nécessiter d'organes de coupe complémentaires, et ceci, tout en conservant notamment la facilité de fabrication et de transport du corps de cette faucheuse.

Pour atteindre ce but, l'invention prévoit que les groupes faucheurs s'étendent dans le voisinage l'un de l'autre et coupent des bandes de produits à récolter au moins adjacentes, et que les bâtis des groupes faucheurs sont rigides et sont fixés sur la structure intermédiaire de manière rigide.

Grâce à cet agencement, on obtient une faucheuse dont l'ensemble bâtis des groupes faucheurs - structure intermédiaire est rigide et peut donc très bien absorber les sollicitations engendrées pendant le travail, tout en étant facilement réalisable et transportable. Ceci permet également de diminuer le prix car il n'est pas nécessaire de prévoir un grand nombre de moyens de support, ni de moyens d'entraînement et de mise en position de transport relativement complexes.

Selon une caractéristique supplémentaire de l'invention, les groupes faucheurs peuvent être équipés d'organes de conditionnement.

L'invention trouve aussi un grand intérêt dans ce genre de machines nommées faucheuses-conditionneuses, car les organes de conditionnement augmentent généralement de manière substantielle le volume des groupes faucheurs, donc de la machine complète.

Selon d'autres caractéristiques de l'invention, les groupes faucheurs ou les groupes faucheurs-conditionneurs peuvent avoir la même longueur ou des longueurs différentes.

Il est ainsi possible, grâce à cette caractéristique de l'invention, de proposer une grande gamme de faucheuses ou de faucheuses-conditionneuses de largeur de travail différente, tout en ne fabriquant qu'un nombre limité de groupes faucheurs et d'organes de conditionnement de largeur de travail différente.

En effet, en combinant entre elles ces différentes largeurs de groupes faucheurs et d'organes de conditionnement, que l'on monte sur la structure intermédiaire, on obtient des largeurs totales de travail différentes. Cette rationalisation de la fabrication permet un abaissement des coûts de production et une grande souplesse pour répondre rapidement à la demande de la clientèle.

Selon une autre caractéristique de l'invention, la structure intermédiaire comporte deux faces latérales, et les groupes faucheurs ou les groupes faucheurs-conditionneurs s'étendent chacun dans le voisinage d'une de ces faces latérales.

Cette caractéristique de l'invention permet de bien intégrer la structure intermédiaire dans le volume général de la machine qui est en grande partie défini par les groupes faucheurs ou les groupes faucheurs-conditionneurs. On s'assure ainsi que la structure intermédiaire ne gêne pas le travail réalisé par les groupes faucheurs ou les groupes faucheurs-conditionneurs.

Avantageusement, le timon est lié à la structure intermédiaire de manière à pouvoir pivoter autour d'un axe dirigé vers le haut. Ceci permet d'amener le timon dans plusieurs positions de travail et dans une position de transport.

Selon une autre caractéristique de l'invention, la structure intermédiaire supporte le carter d'entrée de la machine qui reçoit le mouvement du tracteur par l'intermédiaire de moyens de transmission, et qui distribue ensuite ce mouvement aux groupes faucheurs ou groupes faucheurs-conditionneurs.

Cette caractéristique renforce encore davantage le caractère modulaire de la construction de la faucheuse ou de la faucheuse-conditionneuse de l'invention, dans la mesure où l'ensemble structure intermédiaire, timon et carter d'entrée forme une unité de base qui peut être commune à toute une gamme de faucheuses ou de faucheuses-conditionneuses.

Avantageusement cette unité de base pourra supporter en sus le ou les carters de distribution qui distribuent le mouvement à la sortie du carter d'entrée aux différents organes de travail.

Selon une caractéristique supplémentaire de l'invention, il est prévu que les organes de coupe de chaque groupe faucheur sont supportés par le bâti respectif de manière à pouvoir se déplacer vers le haut et vers le bas par rapport audit bâti.

Les organes de coupe de chaque groupe faucheur peuvent ainsi s'adapter aux configurations du terrain.

D'autres caractéristiques de l'invention ressortent des autres sous-revendications et de la description suivante d'un exemple non limitatif de réalisation de l'invention en référence au dessin annexé sur lequel:

- La figure 1 représente une vue en plan d'une faucheuse-conditionneuse selon l'invention attelée à un tracteur,
- La figure 2 représente une vue latérale du corps de la faucheuse-conditionneuse de la figure 1,
- La figure 3 représente une coupe partielle, vue en plan, d'une extrémité du corps de la faucheuse-conditionneuse de la figure 1,
- La figure 4 représente une coupe partielle, vue en plan, du milieu du corps de la faucheuse-conditionneuse de la figure 1,
- La figure 5 représente une vue latérale partielle d'une variante de réalisation de la structure intermédiaire d'une faucheuse de l'invention,
- La figure 6 représente une gamme de faucheuses-conditionneuses réalisées selon l'invention,
- La figure 7 représente une vue en plan partielle du corps de la faucheuse-conditionneuse de la figure 1 munie d'une variante de réalisation de groupe faucheur,
- La figure 8 représente une vue schématique de l'agencement des organes de transmission dans le carter d'entrée, qui relient l'arbre d'entrée à un premier arbre de sortie, et
- La figure 9 représente une vue schématique de l'agencement des organes de transmission dans le carter d'entrée,

qui relient l'arbre d'entrée à un deuxième arbre de sortie.

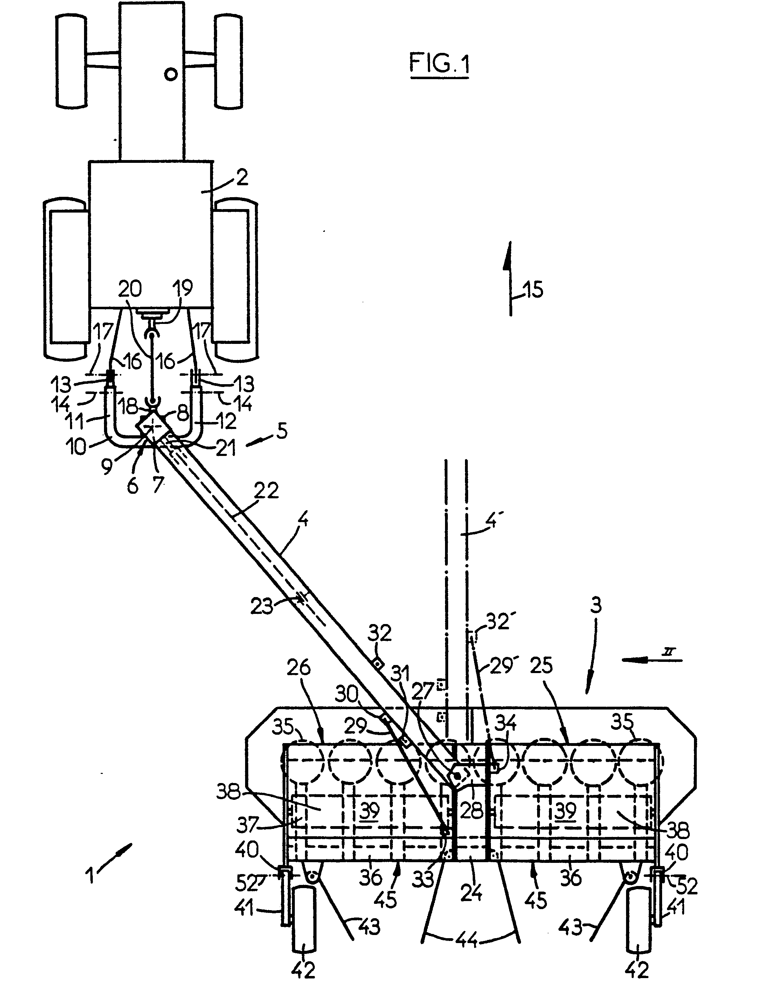

La figure 1 montre une faucheuse (1) selon l'invention accouplée à un tracteur (2). La faucheuse (1) se compose d'un corps (3) et d'un timon (4). A sa partie frontale (5), le timon (4) est muni d'un dispositif de transmission (6) connu de l'homme de l'art. Ce dispositif de transmission (6) comporte un carter supérieur (7) et un carter inférieur (8), qui peuvent tourner l'un par rapport à l'autre autour d'un axe (9) dirigé vers le haut. Le dispositif (6) comporte en sus un cadre (10) lié en rotation au carter inférieur (8). Le cadre (10) comporte à l'extrémité libre de chacune de ses branches (11, 12), une chape (13) reliée au cadre (10) au moyen d'une articulation. Ces articulations des deux chapes (13) ont un axe commun (14) sensiblement horizontal et s'étendant transversalement à la direction d'avance (15) de l'ensemble faucheuse (1) - tracteur (2). Chaque chape (13) est par ailleurs reliée aux bras inférieurs (16) du tracteur (2) au moyen d'une articulation. Ces deux articulations ont un axe commun (17) sensiblement horizontal et s'étendant transversalement à la direction d'avance (15). Le carter inférieur (8) supporte au moins un arbre d'entrée (18) qui est relié à l'arbre de prise de force (19) du tracteur (2) au moyen d'un arbre à joints universels (20), tandis que le carter supérieur (7) supporte un arbre de sortie (21). A l'intérieur du dispositif de transmission (6), le ou les arbres d'entrée (18) sont reliés à l'arbre de sortie (21) au moyen d'organes de transmission connus de l'homme de l'art.

L'arbre de sortie (21) transmet le mouvement aux organes actifs de la faucheuse (1) par l'intermédiaire d'un arbre de transmission (22) lié en rotation audit arbre de sortie (21). Préférentiellement, l'arbre de transmission (22) est logé à l'intérieur du timon (4). Compte tenu de la grande longueur de l'arbre de transmission (22), celui-ci est tenu au timon (4) au moyen d'au moins un palier (23).

Avec le dispositif de transmission (6), la faucheuse (1) peut suivre les dénivellations du sol, indépendamment du tracteur (2), ceci grâce aux articulations des chapes (13) respectivement autour des axes (14 et 17). Par ailleurs, l'ensemble carter inférieur (8) - cadre (10) peut pivoter par rapport au carter supérieur (7) autour de l'axe (9). De cette sorte, le tracteur (2) peut prendre des virages serrés sans que l'arbre à joints universels (20), les organes de transmission logés à l'intérieur du dispositif (6) et l'arbre de transmission (22) ne soient soumis à des contraintes supplémentaires.

Le corps (3) de la faucheuse (1) est formé par trois sous-ensembles principaux: une structure intermédiaire (24) et deux groupes faucheurs (25, 26) situés respectivement de part et d'autre de ladite structure intermédiaire (24).

A son extrémité arrière, le timon (4) est lié à la structure intermédiaire (24) au moyen d'une articulation dont l'axe (27) est dirigé vers le haut. A cet effet, la structure intermédiaire (24) comporte une chape (28).

Grâce à cette articulation, le timon (4) peut pivoter par rapport à la structure intermédiaire (24) de sorte qu'il puisse prendre différentes positions par rapport à ladite structure intermédiaire (24). Sur la figure 1, le timon (4) tel que représenté en traits forts, se trouve dans une position de travail, alors que, tel que représenté en traits mixtes, il se trouve dans une position (4') de transport par exemple.

La position du timon (4) par rapport à la structure intermédiaire (24) est déterminée par des moyens appropriés tels que par exemple un tirant (29) qui collabore avec des pattes (30, 31, 32) solidaires du timon (4) et des pattes (33, 34) solidaires de la structure intermédiaire (24). Ainsi, de manière non limitative, le timon (4) peut occuper par exemple deux positions de travail lorsque le tirant (29) collabore avec la patte (33) et respectivement les pattes (30 ou 31), et une position de transport lorsque ledit tirant collabore avec la patte (34) et la patte (32) (se trouvant en position (32')).

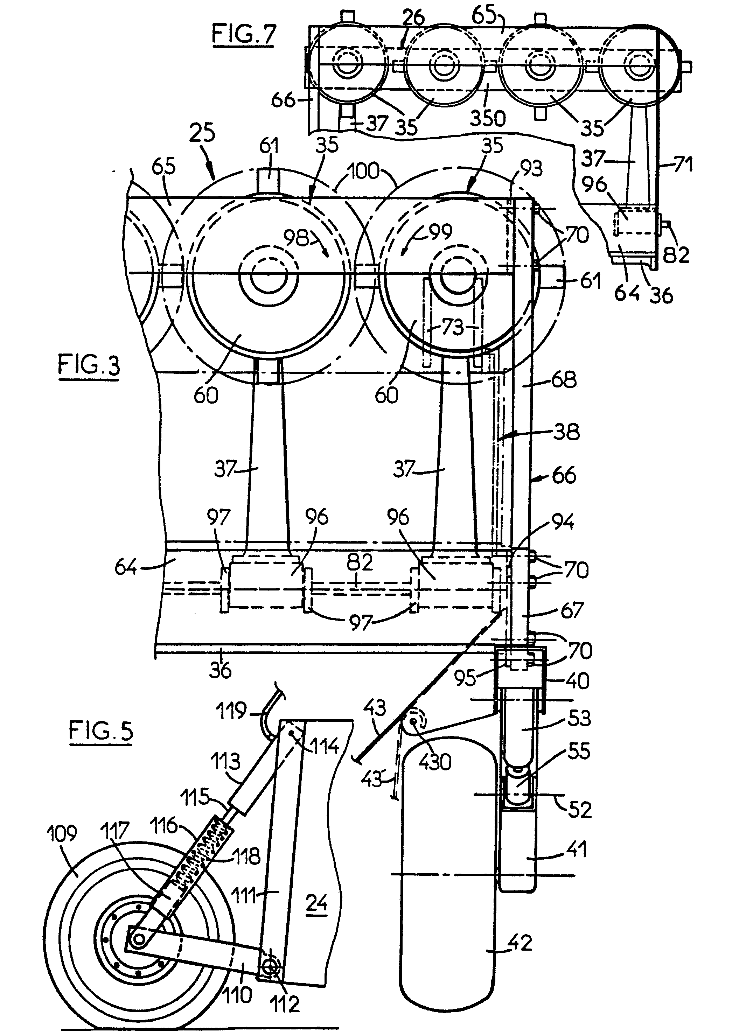

Chaque groupe faucheur (25, 26) comporte, de manière non limitative, quatre têtes de coupe (35) qui sont reliées chacune à un support (36) au moyen d'un bras (37). Il est aussi parfaitement possible dans le cadre de l'invention que plusieurs têtes de coupe (35) d'un même groupe faucheur (25 ou 26) soient reliées entre elles par exemple au moyen d'un carter (350) qui supporte lesdites têtes de coupe et qui contient des organes d'entraînement de celles-ci (voir figure 7).

Sur la figure 1, on voit encore que chaque groupe faucheur comporte en sus des organes de conditionnement (38).

L'ensemble têtes de coupe (35) - organes de conditionnement (38) forme ainsi ce que l'on appelle un groupe faucheur-conditionneur.

Chaque groupe faucheur-conditionneur (25, 38) et (26, 38) s'étend sous un capot (39). A l'arrière de son extrémité libre, chaque groupe faucheur-conditionneur (25, 38) et (26, 38) comporte une chape (40) dans laquelle est articulé un bras (41) à l'extrémité libre duquel est fixée une roue (42). Grâce à ces articulations, la position de chaque roue (42) peut être modifiée par rapport au groupe faucheur-conditionneur (25, 38) et (26, 38) correspondant. Ceci permet de maintenir les groupes faucheurs-conditionneurs (25, 38) et (26, 38) près du sol pendant le travail et loin du sol lorsque le fauchage doit être interrompu ou pendant le transport. Chaque groupe faucheur-conditionneur (25, 38) et (26, 38) comporte en sus à sa partie arrière des dispositifs d'andainage (43, 44) dont la position est de préférence réglable par rapport à l'ouverture de sortie (45) par où sort le produit récolté (voir figure 3). Ce réglage de la position des dispositifs d'andainage (43, 44) permet le calibrage de l'andain de produit récolté.

Chaque groupe faucheur-conditionneur (25, 38) et (26, 38) constitue ainsi une unité qui est montée sur la structure intermédiaire (24) de manière démontable à l'aide de moyens appropriés qui seront décrits plus loin.

L'ensemble ainsi monté, formé par la structure intermédiaire (24) et les groupes faucheurs-conditionneurs (25, 38) et (26, 38), constitue le corps (3) de la fauchause qui dans ce cas est, ce que l'on appelle une faucheuse-conditionneuse. Le corps (3) de cette faucheuse roule sur le sol par l'intermédiaire des roues (42). L'entraînement en rotation des têtes de coupe (35) et des organes de conditionnement (38) est produit par l'arbre de transmission (22) et un mécanisme de transmission logé dans le corps (3) de la faucheuse et qui sera décrit ultérieurement.

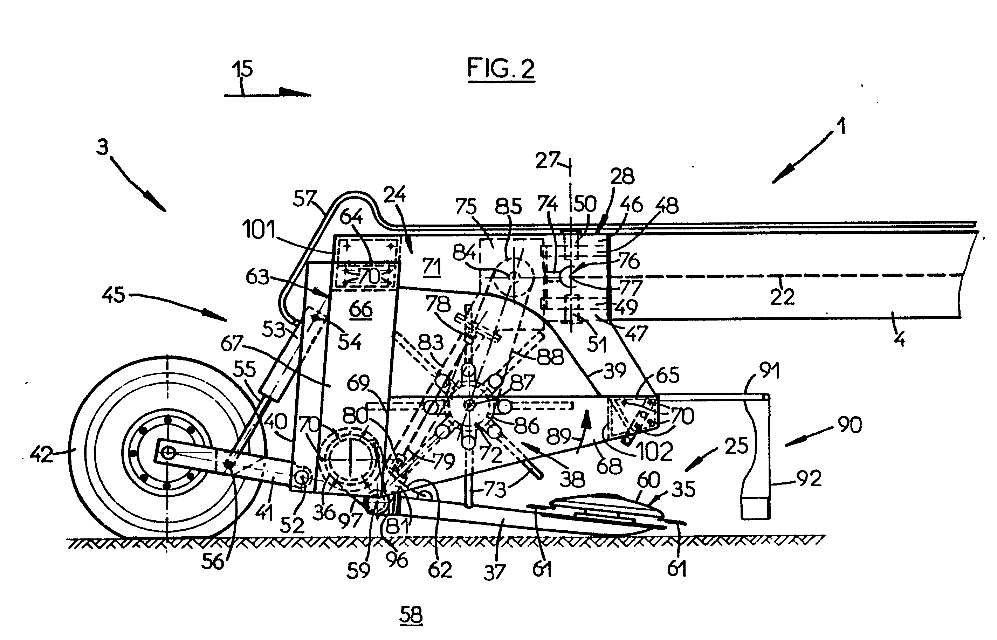

Sur la figure 2, on voit une vue latérale du corps (3) de la faucheuse (1). On retrouve la structure intermédiaire (24) et le groupe faucheur-conditionneur (25, 38). A l'avant de la structure intermédiaire (24) se trouve la chape (28) qui comporte deux ailes (46, 47). Le timon (4) est muni de deux pattes (48, 49) qui s'étendent entre les ailes (46, 47) de la chape (28) et y sont liées au moyen de deux pivots (50, 51) qui définissent l'axe de rotation (27) du timon par rapport à la structure intermédiaire (24).

Sur la figure 2, on retrouve également la roue (42) liée au groupe faucheur-conditionneur (25, 38) au moyen du bras (41). L'extrémité du bras (41) éloignée de la roue (42) pénètre dans la chape (40) qui s'étend le long de la paroi arrière du groupe faucheur-conditionneur et y est liée au moyen de l'articulation (52). A la partie supérieure de la chape (40) est lié le cylindre (53) d'un vérin au moyen d'une articulation (54) tandis que la tige (55) du vérin est liée au bras (41) au moyen d'une articulation (56). Le vérin (53, 55) est actionné par exemple par le circuit hydraulique du tracteur (2) dont l'huile est amenée par une conduite (57). Ainsi, lorsque le circuit hydraulique du tracteur (2) refoule de l'huile dans le cylindre (53) du vérin, la longueur du vérin augmente, ce qui éloigne le corps (3) de la faucheuse du sol (58). Parallèlement les têtes de coupe (35) s'éloignent également du sol (58). La remontée des têtes de coupe (35) s'effectue cependant avec un léger retard. En effet, chaque tête de coupe (35) est montée sur le support (36) de manière à pouvoir pivoter autour d'un axe (59) sensiblement horizontal et s'étendant transversalement à la direction d'avance (15) de la faucheuse. (Si, comme dit plus haut, plusieurs têtes de coupe (35) sont reliées entre elles et que cet ensemble est par exemple fixé au support (36) au moyen d'au moins un bras (37), ce sera tout l'ensemble qui pourra pivoter autour de l'axe (59)). Ce pivotement possible de la tête de coupe (35) et de son bras (37) permet à la tête de coupe (35) qui se compose d'un disque rotatif (60) muni d'au moins un élément coupant (61), de s'adapter aux irrégularités que peut présenter le sol (58) sur lequel opère la faucheuse. Le pivotement de la tête de coupe (35) vers le bas est limité grâce à un élément de traction (62) qui est respectivement lié au support (36) et au bras (37). Ainsi, la remontée de la tête de coupe (35) s'effectuera lorsque l'élément de traction (62) sera tendu. Il y a lieu de noter qu'en position de travail, l'élément de traction (62) ne gêne pas le débattement de la tête de coupe (35) qui peut suivre les irrégularités du sol (58), sauf si la tête de coupe (35) rencontre un trou d'une trop grande profondeur.

Tel que visible sur la figure 2, le bâti (63) du groupe faucheur-conditionneur (25, 38) comporte deux longerons, un longeron supérieur (64) et un longeron avant (65), et le support (36) qui sert également de longeron au bâti (63) outre sa fonction de support des têtes de coupe (35). La distance entre les longerons (64 et 65) et le support (36) est maintenue par des parois latérales. La paroi latérale (66) située à l'extrémité extérieure du groupe faucheur-conditionneur, est formée par une branche sensiblement verticale (67) et une branche sensiblement horizontale (68) qui sont reliées entre elles par soudure par exemple le long de la ligne (69). La paroi latérale ainsi formée est fixée sur l'extrémité des longerons (64, 65) et du support (36) par des moyens appropriés, tels que des boulons (70) par exemple. Du côté de la structure intermédiaire (24), les longerons (64, 65) et le support (36) sont également fixés sur la paroi latérale (71) par des moyens appropriés, tels que des boulons (70) par exemple.

L'ouverture supérieure du bâti (63) ainsi formée, est obturée par le capot (39). Sous ce capot (39) s'étend l'organe de conditionnement (38) qui se compose dans l'exemple d'un rotor comportant un tube central (72) sur lequel sont articulés des doigts (73). L'extrémité libre des doigts (73) s'étend jusque dans le voisinage des bras (37). Le rotor (72, 73) est guidé en rotation dans des paliers non représentés mais qui sont à la portée de l'homme de l'art et qui sont fixés sur les parois latérales (66 et 71).

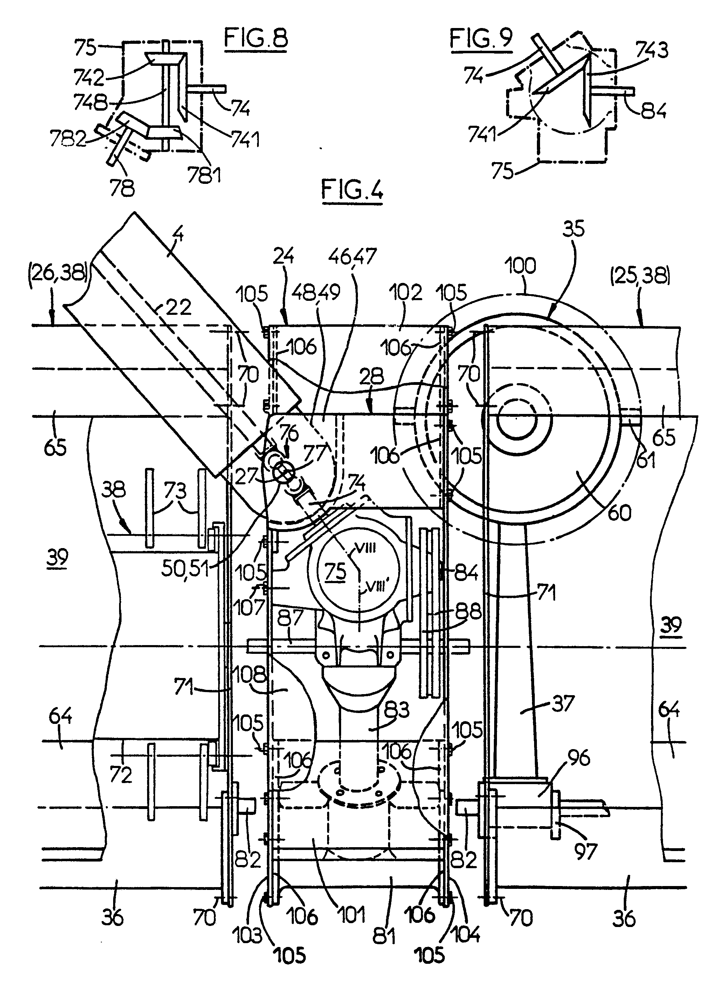

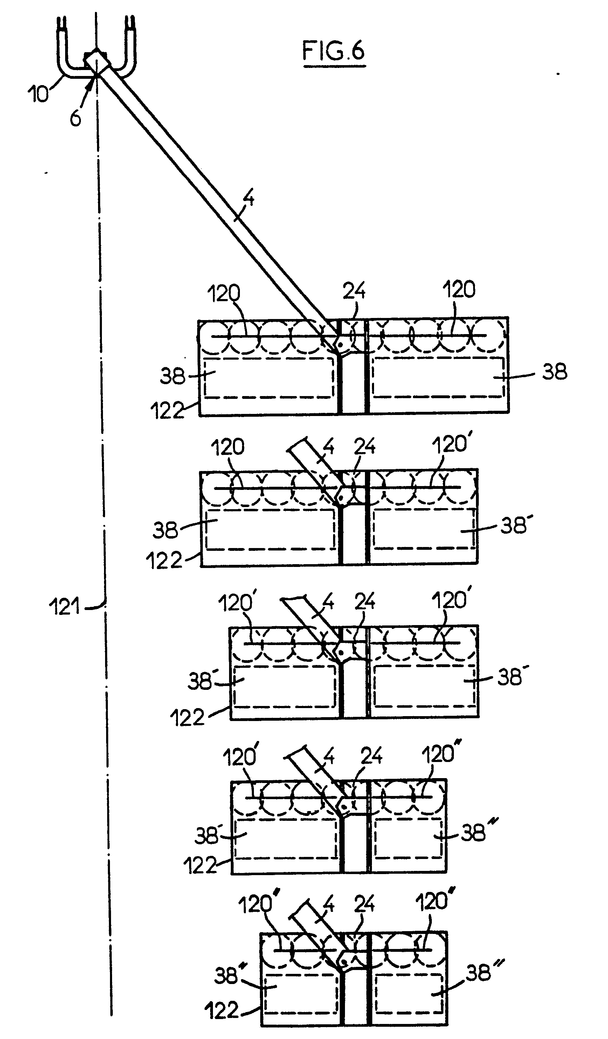

L'entraînement en rotation des organes rotatifs de la faucheuse se fait au moyen de l'arbre de transmission (22) qui reçoit le mouvement du tracteur, comme expliqué plus haut. Cet arbre de transmission (22) est lié en rotation à l'arbre d'entrée (74) d'un carter d'entrée (75), au moyen d'un joint universel (76) qui est de préférence homocinétique. Le centre (77) du joint universel (76) se trouve préférentiellement sensiblement sur l'axe (27) autour duquel peut pivoter le timon (4) par rapport à la structure intermédiaire (24). Ceci présente des avantages lorsque le timon peut occuper plusieurs positions de travail. Le carter d'entrée (75) comporte un arbre de sortie (78) qui s'étend depuis la partie inférieure dudit carter (75) vers le bas et vers l'arrière. Les organes de transmission s'étendant à l'intérieur du carter d'entrée (75) et qui relient l'arbre d'entrée (74) à l'arbre de sortie (78), sont représentés schématiquement sur la figure 8, représentant une coupe du carter d'entrée (75) suivant les plans VIII, VIII' (figure 4). Ces organes sont composés par un premier couple de roues dentées (741, 742) qui transmet le mouvement de l'arbre d'entrée (74) à un arbre intermédiaire (748) guidé en rotation dans le carter d'entrée (75). Un deuxième couple de roues dentées (781, 782) transmet le mouvement de l'arbre intermédiaire (748) à l'arbre de sortie (78). L'arbre de sortie (78) est lié en rotation à un axe d'entrainement (79) qui attaque l'arbre d'entrée (80) d'un carter de distribution (81). Le carter de distribution (81) distribue ensuite latéralement le mouvement à un arbre (82) (figures 3, 4 et 7) centré sur l'axe (59) autour duquel peuvent pivoter les têtes de coupe (35). A l'intérieur du carter de distribution (81) sont disposés des organes de transmission qui sont à la portée de l'homme de l'art. De même, l'entrainement en rotation du disque (60) de chaque tête de coupe (35) est également à la portée de l'homme de l'art. Le carter d'entrée (75) et le carter de distribution (81) sont reliés entre eux par un tube entretoise (83) qui y est respectivement fixé au moyen de boulons par exemple.

Le carter d'entrée (75) comporte en sus un autre arbre de sortie (84) sensiblement horizontal et s'étendant transversalement à la direction (15). Les organes de transmission s'étendant à l'intérieur du carter d'entrée (75) et qui relient l'arbre d'entrée (74) à l'arbre de sortie (84), sont représentés schématiquement sur la figure 9. Ces organes sont composés par un couple de roues dentées (741, 743) qui transmet le mouvement de l'arbre d'entrée (74) à l'arbre de sortie (84). L'arbre de sortie (84) est muni d'une roue (85) qui y est liée en rotation. Cette roue (85) entraîne une roue (86) calée sur l'axe (87) du rotor (72, 73), par l'intermédiaire par exemple d'au moins une chaîne (88) de sorte que le rotor (72, 73) est entraîné en rotation dans le sens défini par la flèche (89). Les doigts (73) du rotor (72, 73) peuvent ainsi agripper le produit coupé par les éléments coupants (61) lors de la rotation des disques (60) et le faire passer dans le canal formé par le rotor (72, 73) et le capot (39). L'action combinée des doigts (73) du rotor (72, 73) et du frottement sur la face intérieure du capot (39) produit un conditionnement du produit récolté qui est ensuite éjecté par l'ouverture arrière de sortie (45) de la machine, pour être déposé sur le sol où il séchera avant d'être ramassé. (Les dispositifs d'andainage (43, 44) visibles sur la figure 1 n'ont pas été représentés sur la figure 2 pour ne pas encombrer cette figure).

Sur la figure 2, on voit encore un protecteur (90) qui se compose d'un cadre support (91) supportant le long de son bord libre une paroi (92) de préférence en matière souple. Le cadre support (91) est monté sur le bâti (63) du groupe faucheur-conditionneur, de préférence au moyen d'une articulation qui autorise son rabattement pour par exemple faciliter l'accès aux têtes de coupe (35) ou au rotor (72, 73). La fonction de ce protecteur (90) consiste à freiner ou à arrêter les projections de corps étrangers qui pourraient blesser quelqu'un se trouvant dans le voisinage de la machine.

Sur la figure 3, on voit l'extrémité extérieure du groupe faucheur-conditionneur (25, 38). (Le capot (39) a été enlevé pour une meilleure clarté de la figure). On voit en particulier le montage de la paroi latérale extérieure (66) sur les longerons (64 et 65) ainsi que sur le support (36). A cet effet, les longerons (64, 65) et le support (36) qui sont de préférence tubulaires, comportent une bride (93, 94, 95). Ces brides sont soudées sur les extrémités des longerons (64, 65) et du support (36), et comportent un certain nombre de trous filetés dans lesquels se vissent les boulons (70).

Sur cette figure, on voit aussi l'arbre d'entraînement (82) qui transmet le mouvment depuis le carter de distribution (81) aux différentes têtes de coupe (35). Cet arbre (82) traverse un carter de renvoi (96) fixé à chaque bras (37). Les carters de renvoi (96) sont supportés par le support (36) par l'intermédiaire de pattes (97) qui autorisent le pivotement desdits carters de renvoi (96) autor de l'axe longitudinal de l'arbre (82). Les disques (60) sont de préférence entraînés en sens contraire deux à deux, tel que le montrent les flèches (98 et 99). On ne sortira cependant pas du cadre de l'invention si les disques sont entraînés dans le même sens. Cet entraînement des disques (60) est réalisé de manière synchrone et les éléments coupants (61) de deux disques (60) voisins sont décalés angulairement, ce qui permet un recouvrement de leur trajectoire extrême (100).

Sur la figure 3, on voit encore le dispositif d'andainage (43). Celui-ci est composé par une tôle réglable entre une position (43) et une position (43'). Le réglage de la tôle (43) se fait autour d'un axe (430) dirigé vers le haut. Il y a lieu de noter que le réglage de la position du dispositif d'andainage (44) peut s'opérer d'une manière analogue à celui de la tôle (43).

Dans les figures 2 et 3, on a décrit la structure du groupe faucheur-conditionneur (25, 38). Il y a cependant lieu de noter que cette description est également valable pour le groupe faucheur-conditionneur (26, 38) qui comporte en grande partie les mêmes organes que le groupe faucheur-conditionneur (25, 38).

Sur la figure 4, on voit la partie centrale du corps (3) de la faucheuse-conditionneuse. Les groupes faucheurs-conditionneurs (25, 38) et (26, 38) ont été séparés de la structure intermédiaire (24) pour expliquer le mode d'assemblage dudit corps (3) de la machine.

La structure intermédiaire (24) se compose essentiellement de deux entretoises (101, 102), du carter de distribution (81) et de la chape (28) qui forment également entretoise. La distance entre les entretoises (101, 102), le carter de distribution (81) et la chape (28) est maintenue au moyen de deux tôles latérales (103, 104) qui y sont fixées à l'aide des vis (105) par exemple. A cet effet, les extrémités des entretoises (101 et 102), la chape (28) et le carter de distribution (81) comportent des brides (106) dans lesquelles sont aménagés un certain nombre de trous filetés pour les vis (105). La structure ainsi formée supporte en sus le carter d'entrée (75) qui est fixé d'une part sur le carter de distribution (81) au moyen du tube entretoise (83), comme dit plus haut, et d'autre part sur la tôle latérale (103) à l'aide de vis (107). Les ouvertures qui subsistent sur la structure sont obturées par une tôle d'habillage (108).

La structure intermédiaire ainsi constituée, forme une unité autonome sur laquelle on monte ensuite aisément et de manière démontable, le timon (4) et les groupes faucheurs-conditionneurs (25, 38) et (26, 38). L'assemblage se fait en rapprochant les groupes faucheurs-conditionneurs de la structure intermédiaire (24) jusqu'à ce que les parois latérales (71) touchent les tôles latérales (103, 104). On solidarise ensuite celles-ci entre elles au moyen de vis. En rapprochant les groupes faucheurs-conditionneurs de la structure intermédiaire (24), on accouple également les organes d'entraînement qui entraîneront en rotation les rotors (72, 73) et les têtes de coupe (35). Pour expliquer cet accouplement, on a représenté sur la figure 4, le rotor (72, 73) du groupe faucheur-conditionneur (26, 38) et la tête de coupe (35) extrême intérieure du groupe faucheur-conditionneur (25, 38) étant bien entendu que l'accouplement du rotor (72, 73) du groupe faucheur-conditionneur (25, 38) et de la tête de coupe (35) extrême intérieure du groupe faucheur-conditionneur (26, 38) s'opérera de la même manière. Pour ce faire, on voit que l'arbre (87) dépasse de part et d'autre des tôles latérales (103 et 104) de la structure intermédiaire (24) qui comportent à cet effet des ouvertures adéquates. De même, on voit que l'arbre (82) qui sert à l'entraînement des têtes de coupe (35) dépasse de la paroi latérale (71). En rapprochant donc les groupes faucheurs-conditionneurs de la structure intermédiaire (24), on solidarise en rotation d'une part l'arbre (87) avec les rotors (72, 73), et d'autre part les arbres (82) avec les organes d'entraînement logés dans le carter de distribution (81). A cet effet, les extrémités de l'arbre (87) et les alésages aménagés aux extrémités des rotors (72, 73), de même que les extrémités des arbres (82) et les alésages aménagés dans les organes d'entraînement logés dans le carter de distribution (81) ont des formes adéquates permettant leur liaison en rotation.

Il y a lieu de noter que dans le cadre de l'invention, il est possible de supprimer les tôles latérales (103 et 104) de la structure intermédiaire (24). Dans ce cas, les entretoises (101 et 102), le carter de distribution (81) et la chape (28) seront directement fixés, de manière démontable, sur les parois latérales (71) des groupes faucheurs-conditionneurs (25, 38) et (26, 38). De même, le carter d'entrée (75) sera également fixé sur au moins une paroi latérale (71). L'accouplement de l'arbre (87) avec les rotors (72, 73), et des arbres (82) avec le carter de distribution (81) s'effectuera d'une manière semblable à celle décrite plus haut.

Sur la figure 5, on voit une roue supplémentaire (109) qui est montée sur la structure intermédiaire (24). La fonction de cette roue supplémentaire est de limiter la flèche du corps (3) lorsque celui-ci a une trop grande largeur. La roue (109) est fixée à l'extrémité libre d'un bras (110). A son autre extrémité, le bras (110) est articulé sur une chape (111) autour d'un axe (112). Préférentiellement, l'axe (112) est confondu avec l'axe (52) autour duquel sont articulées les roues (42). La chape (111) s'étend le long de la paroi arrière de la structure intermédiaire (24). A la partie supérieure de la chape (111) est lié le cylindre (113) d'un vérin au moyen d'une articulation (114), tandis que la tige (115) du vérin est liée à un tube (116). Le tube (116) est ouvert à sa partie inférieure. Dans cette ouverture, on a fait pénétrer un piston (117), après avoir introduit un ressort (118). L'autre extrémité du piston (117) est articulée sur le bras (110). Dans sa partie supérieure, le cylindre (113) est relié à une conduite (119) qui est branchée sur le circuit hydraulique du tracteur.

Telle que représentée, la roue (109) se trouve en position de travail. Grâce au ressort (118), la roue (109) peut pivoter vers le haut dans certaines limites autour de l'articulation (112), même si le vérin (113, 115) est bloqué hydrauliquement. La fonction de ce pivotement possible est d'assurer que les roues (42) situées à chaque extrémité du corps (3), restent toujours en contact avec le sol (58) quelle que soit la configuration du sol, tout en limitant la flèche du corps (3) de la faucheuse entre ses extrémités extérieures.

Lorsque le corps (3) de la faucheuse doit être relevé, on amène de l'huile dans le vérin par la conduite (119). Simultanément l'huile est également amenée dans les vérins (53, 55) par les conduites (57). Lorsque le corps (3) se trouve en position relevée, la roue (109) pourra, tout comme en position basse, pivoter dans certaines limites vers le haut, autour de l'articulation (112) à l'encontre du ressort (118).

On ne sortira bien entendu pas du cadre de l'invention si au lieu d'une roue (109), on équipe la machine de plusieurs roues supplémentaires. De même, au lieu d'être fixées sur la structure intermédiaire (24), ces roues supplémentaires peuvent être fixées à l'extrémité intérieure des groupes faucheurs-conditionneurs (25, 38) et (26, 38). On pourra également utiliser un autre organe élastique que le ressort (118).

Sur la figure 6, on a visualisé le caractère modulaire de la construction de la faucheuse selon l'invention et la rationalisation qui en découle au niveau de la fabrication. En effet, à l'aide de la figure 6, on voit par exemple qu'avec trois largeurs de barre de coupe (120, 120', 120") et trois largeurs d'organes de conditionnement (38, 38', 38"), on peut faire une gamme de cinq faucheuses-conditionneuses de largeur de travail différente, la structure intermédiaire (24), le timon (4) et le dispositif de transmission (6) restant les mêmes pour les cinq machines.

Ceci est également vrai pour d'autres pièces telles que les longerons (64, 65) ou les supports (36) ou encore les arbres (82). Cette liste de pièces n'est bien sûr pas exhaustive. On voit donc immédiatement que la production de cette gamme de faucheuses-conditionneuses est très simplifiée. De même, la productivité est considérablement augmentée, compte tenu du nombre réduit de pièces différentes à fabriquer.

L'augmentation des séries de ces pièces qui en résulte, permet ainsi en général d'abaisser considérablement les coûts de production.

Sur la figure 6, on voit que la distance entre l'axe longitudinal (121) du tracteur et l'extrémité libre intérieure (122) du corps (3) des différentes faucheuses, augmente si le timon (4) reste dans la position représentée. Mais, comme décrit plus haut, le timon (4) peut occuper plusieurs positions de travail, de sorte que ladite distance entre l'axe (121) et l'extrémité libre intérieure (122) du corps (3) des machines peut être maintenue sensiblement constante ou du moins son augmentation peut être limitée.

Divers perfectionnements, modifications ou améliorations peuvent être apportés à l'exemple décrit ci-dessus sans pour autant sortir de la présente invention.

En particulier, il va de soi que l'invention ne se limite pas à une faucheuse-conditionneuse mais pourra aussi s'appliquer à une faucheuse sans système de conditionnement.

## Revendications

1. Faucheuse (1) munie d'un corps (3) qui comporte une structure intermédiaire (24) à laquelle est lié un timon (4) permettant la liaison de la faucheuse (1) à un tracteur (2), deux groupes faucheurs (25 ; 26) qui comportent chacun un bâti (63) fixé de manière démontable sur la structure intermédiaire (24) de telle sorte qu'en vue de dessus, un groupe faucheur (25) s'étend d'un côté de la structure intermédiaire (24) et l'autre groupe faucheur (26) de l'autre côté de ladite structure intermédiaire (24), et des moyens d'entraînement (26, 6, 18, 21, 22, 76, 74, 75, 78, 79, 80, 81, 82, 96) entraînant les groupes faucheurs (25 ; 26), caractérisée par le fait que les groupes faucheurs (25 ; 26) s'étendent dans le voisinage l'un de l'autre et coupent des bandes de produits à récolter au moins adjacentes, et que les bâtis (63) des groupes faucheurs (25 ; 26) sont rigides et sont fixés sur la structure intermédiaire (24) de manière rigide.

2. Faucheuse selon la revendication 1, caractérisée par le fait que les groupes faucheurs (25 ; 26) comportent en sus des organes de conditionnement (38, 72, 73) également entraînés par lesdits moyens d'entraînement (20, 6, 18, 21, 22, 76, 74, 75, 78, 79, 80, 81, 82, 96).

3. Faucheuse selon la revendication 1 ou 2, caractérisée par le fait que le premier groupe faucheur (25) ou le premier groupe faucheur-conditionneur (25, 38) a la même longueur que le deuxième groupe faucheur (26), respectivement le deuxième groupe faucheur-conditionneur (26, 38).

4. Faucheuse selon la revendication 1 ou 2, caractérisée par le fait que le premier groupe faucheur (25) ou le premier groupe faucheur-conditionneur (25, 38) a une longueur différente du deuxième groupe faucheur (26), respectivement du deuxième groupe faucheur-conditionneur (26, 38).

5. Faucheuse selon l'une des revendications 1 à 4, caractérisée par le fait que la structure intermédiaire (24) comporte deux faces latérales (103, 104) et que les deux groupes faucheurs (25 ; 26) ou les deux groupes faucheurs-conditionneurs (25, 38) et (26, 38) s'étendent chacun dans le voisinage d'une desdites faces latérales (103, 104).

6. Faucheuse selon l'une des revendications 1 à 5, caractérisée par le fait que le timon (4) est lié à la structure intermédiaire (24) et peut pivoter autour d'un axe (27) dirigé vers le haut.

7. Faucheuse selon la revendication 6, caractérisée par le fait que le timon (4) peut pivoter entre au moins une position de travail et une position de transport.

8. Faucheuse selon la revendication 6 ou 7, caractérisée par le fait que le timon (4) peut occuper plusieurs positions de travail.

9. Faucheuse selon l'une des revendications 1 à 8, caractérisée par le fait que la structure intermédiaire (24) supporte le carter d'entrée (75).

10. Faucheuse selon la revendication 9, caractérisée par le fait qu'un accouplement à joint universel (76) est prévu entre le carter d'entrée (75) et les moyens de transmission (22) qui transmettent le mouvement depuis l'avant du timon (4) audit carter d'entrée (75) et qui sont constitués par au moins un arbre (22) logé dans le timon (4).

11. Faucheuse selon la revendication 10 et l'une des revendications 6 à 8, caractérisée par le fait que l'axe (77) du joint universel (76) est sensiblement confondu avec l'axe (27) autour duquel peut pivoter le timon (4).

12. Faucheuse selon la revendication 11, caractérisée par le fait que le joint universel (76) est homocinétique.

13. Faucheuse selon l'une des revendications 1 à 12, caractérisée par le fait que la structure intermédiaire (24) supporte au moins un carter de distribution (81).

14. Faucheuse selon l'une des revendications 1 à 13, caractérisée par le fait que le bâti (63) de chaque groupe faucheur (25 ; 26) ou de chaque groupe faucheur-conditionneur (25, 38) et (26, 38) se compose essentiellement d'une pluralité de longerons (36, 64, 65) dont la distance respective est maintenue au moyen d'au moins une paroi latérale (66, 71).

15. Faucheuse selon la revendication 14, caractérisée par le fait que la ou les parois latérales (66, 71) sont fixées sur les longerons (36, 64, 65) à l'aide de moyens (70), de sorte que l'assemblage soit démontable.

16. Faucheuse selon la revendication 14 ou 15, caractérisée par le fait que le nombre de longerons (36, 64, 65) est de 3.

17. Faucheuse selon l'une des revendications 1 à 16, caractérisée par le fait que les organes de coupe (35) de chaque groupe faucheur (25 ; 26) sont supportés par le bâti (63) respectif au moyen d'au moins un bras (37).

18. Faucheuse selon l'une des revendications 1 à 17, caractérisée par le fait que les organes de coupe (35) de chaque groupe faucheur (25 ; 26) sont supportés par le bâti (63) respectif de manière à pouvoir se déplacer vers le haut et vers le bas par rapport audit bâti (63).

19. Faucheuse selon la revendication 18, caractérisée par le fait que chaque groupe faucheur (25 ; 26) comporte une pluralité d'organes de coupe (35) qui peuvent se déplacer conjointement par rapport au bâti (63) respectif.

20. Faucheuse selon la revendication 18 ou 19, caractérisée par le fait que le mouvement des organes de coupe (35) vers le haut et vers le bas par rapport au bâti (63) respectif est un mouvement de pivotement autour d'un axe (59) sensiblement horizontal et s'étendant transversalement à la direction d'avance (15).

21. Faucheuse selon l'une des revendications 1 à 20, caractérisée par le fait que son corps (3) repose sur le sol au moyen de deux roues (42) qui peuvent pivoter autour d'un axe (52) horizontal et s'étendant transversalement à la direction d'avance (15).

22. Faucheuse selon la revendication 21, caractérisée par le fait qu'une roue (42) s'étend près de l'extrémité libre de chaque groupe faucheur (25 ; 26) ou de chaque groupe faucheur-conditionneur (25, 38) et (26, 38).

23. Faucheuse selon la revendication 21 ou 22, caractérisée par le fait que le corps (3) de la faucheuse s'appuie sur au moins une autre roue (109) située entre les premières roues (42) et qui peut pivoter par rapport au corps (3).

24. Faucheuse selon la revendication 23, caractérisée par le fait que la ou les roues supplémentaires (109) peuvent pivoter par rapport au corps (3) à l'encontre d'un organe élastique (118).

25. Faucheuse selon la revendication 23 ou 24, caractérisée par le fait que la ou les roues supplémentaires (109) sort fixées sur la structure intermédiaire (24).

26. Faucheuse selon la revendication 21 ou 22 et la revendication 23, 24 ou 25, caractérisée par le fait que la ou les roues supplémentaires (109) pivotent autour d'un axe (112) qui est sensiblement confondu avec l'axe (52) autour duquel pivotent les premières roues (42).

27. Faucheuse selon la revendication 26, caractérisée par le fait que le pivotement des roues (42) autour de l'axe (52), et de la ou des roues (109) autour de l'axe (112) est provoqué par des vérins (53, 55) et (113, 115).

28. Faucheuse selon l'une des revendications 1 à 27, caractérisée par le fait que la structure intermédiaire (24) se compose essentiellement d'un certain nombre d'entretoises (28, 81, 101, 102).

29. Faucheuse selon l'une des revendications 9 à 12 et/ou la revendication 13, et la revendication 28, caractérisée par le fait que le carter d'entrée (75) et/ou le carter de distribution (81) constituent des entretoises de la structure intermédiaire (24).

30. Faucheuse selon l'une des revendications 28 ou 29, caractérisée par le fait que la distance entre les entretoises (28, 81, 101, 102) est maintenue par au moins une tôle latérale (103, 104).

31. Faucheuse selon la revendication 30, caractérisée par le fait que la ou les tôles latérales (103, 104) sont fixées sur les entretoises (28, 81, 101, 102) à l'aide de moyens (105), de sorte que l'assemblage soit démontable.

32. Faucheuse selon l'une des revendications 1 à 31, caractérisée par le fait que les moyens d'entraînement (81, 87) des organes de coupe (35) et/ou des organes de conditionnement (38) s'accouplent avec les groupes faucheurs (25 ; 26) et/ou les groupes faucheurs-conditionneurs (25, 38) et (26, 38) lors de l'assemblage desdits groupes faucheurs (25 ; 26) ou desdits groupes faucheurs-conditionneurs (25, 38) et (26, 38) sur la structure intermédiaire (24).

33. Faucheuse selon la revendication 32, caractérisée par le fait que la structure intermédiaire supporte au moins une partie desdits moyens d'entraînement (81, 87).

34. Faucheuse selon la revendication 33, caractérisée par le fait que les moyens d'entraînement (87) des organes de conditionnement (38) sont constitués par un arbre (87) dont les deux extrémités sortent des faces latérales de la structure intermédiaire (24).

35. Faucheuse selon la revendication 33, caractérisée par le fait que les moyens d'entraînement (81) des organes de coupe (35) comportent un carter de distribution (81) dans lequel pénètre un arbre (82) qui dépasse de la paroi latérale (71) du groupe faucheur correspondant (25 ; 26) ou du groupe faucheur-conditionneur correspondant (25, 38) et (26, 38).

36. Faucheuse selon les revendications 9 et 13, caractérisée par le fait que le carter de distribution (81) est situé plus bas que le carter d'entrée (75), les deux carters étant liés par des moyens de transmission (79).

37. Faucheuse selon la revendication 36, caractérisée par le fait que le carter de distribution (81) est situé plus en arrière que le carter d'entrée (75).

38. Faucheuse selon les revendications 9 et 13 ou l'une des revendications 36 et 37, caractérisée par le fait que le carter d'entrée (75) et le carter de distribution (81) sont liés rigidement au moyen d'un tube entretoise (83).

39. Faucheuse selon la revendication 38, caractérisée par le fait que les moyens de transmission (79) s'étendent à l'intérieur du tube entretoise (83).

40. Faucheuse selon l'une des revendications 1 à 39, caractérisée par le fait que chaque groupe faucheur (25 ; 26) ou chaque groupe faucheur-conditionneur (25, 38) et (26, 38) est muni de moyens d'andainage (43, 44) de préférence réglable autour d'un axe (430) dirigé vers le haut.

**Patentansprüche**

1. Mäher (1) mit einem Körper (3), der eine Zwischenstruktur (24), an welcher eine zur Verbindung des Mähers (1) mit einem Schlepper (2) bestimmten Deichsel (4) verbunden ist, zwei Mäheinheiten (25 ; 26), die je mit einem an der Zwischenstruktur 24) demontierbar befestigten Rahmen (63) versehen sind, so dass, von oben gesehen, sich eine Mäheinheit (25) auf einer Seite der Zwischenstruktur (24) und die andere Mäheinheit (26) auf der anderen Seite der Zwischenstruktur (24) erstrecken, und zum Antrieb der Mäheinheiten (25 ; 26) bestimmten Antriebsmitteln (26, 6, 18, 21, 22, 76, 74, 75, 78, 79, 80, 81, 82, 96) aufweist, dadurch gekennzeichnet, dass sich die Mäheinheiten (25 ; 26) in der Nähe einem vom anderen erstrecken und zumindest anliegende Futterstreifen Mähen, und dass die Rahmen (63) der Mäheinheiten (25 ; 26) starr sind und starr an der Zwischenstruktur (24) befestigt sind.

2. Mäher nach Anspruch 1, dadurch gekennzeichnet, dass die Mäheinheiten (25 ; 26) zusätzlich Aufbereitungsorgane (38, 72, 73) aufweisen, die auch mit den Antriebsmitteln (20, 6, 18, 21, 22, 76, 74, 75, 78, 79, 80, 81, 82, 96) angetrieben werden.

3. Mäher nach Anspruch 1 oder 2, dadurch gekennzeichnet, dass die erste Mäheinheit (25) oder die erste Mäh- und Aufbereitungseinheit (25, 38) die gleiche Länge als die zweite Mäheinheit (26) oder die zweite Mäh- und Aufbereitungseinheit (26, 38) hat.

4. Mäher nach Anspruch 1 oder 2, dadurch gekennzeichnet, dass die erste Mäheinheit (25) oder die erste Mäh- und Aufbereitungseinheit (25, 38) eine andere Länge als die zweite Mäheinheit (26) oder die zweite Mäh- und Aufbereitungseinheit (26, 38) hat.

5. Mäher nach einm der Ansprüche 1 bis 4, dadurch gekennzeichnet, dass die Zwischenstruktur (24) zwei Seitenwände (103, 104) aufweist, und dass sich jede der beiden Mäheinheiten (25 ; 26) oder jede der beiden Mäh- und Aufbereitungseinheiten (25, 38) und (26, 38) in der Nähe einer dieser Seitenwände (103, 104) erstrecken.

6. Mäher nach einem der Ansprüche 1 bis 5, dadurch gekennzeichnet, dass die Deichsel (4) mit der Zwischenstruktur (24) verbunden ist und um eine stehende Achse (27) schwenken kann.

7. Mäher nach Anspruch 6, dadurch gekennzeichnet, dass die Deichsel (4) zwischen zumindest einer Arbeits- und einer Transportstellung schwenken kann.

8. Mäher nach Anspruch 6 oder 7, dadurch gekennzeichnet dass die Deichsel (4) mehrere Arbeitsstellungen einnehmen kann.

9. Mäher nach einem der Ansprüche 1 bis 8, dadurch gekennzeichnet, dass die Zwischenstruktur (24) das Eingangsgehäuse (75) trägt.

10. Mäher nach Anspruch 9, dadurch gekennzeichnet, dass zwischen dem Eingangsgehäuse (75) und den Antriebsübertragungsmitteln (22), welche den Antrieb von der Vorderseite der Deichsel (4) zu dem Eingangsgehäuse (75) übertragen und aus zumindest einer, in der Deichsel (4) eingebauten Welle (22) bestehen, eine kreuzgelenkige Kupplung (76) vorgesehen ist.

11. Mäher nach Anspruch 10 und einem der Ansprüche 6 bis 8, dadurch gekennzeichnet, dass die Achse (77) des Kreuzgelenkes (76) und die Achse (27) um welche die Deichsel (4) schwenken kann, etwa gleich sind.

12. Mäher nach Anspruch 11, dadurch gekennzeichnet, dass das Kreuzgelenk (76) homokinetisch ist.

13. Mäher nach einem der Ansprüche 1 bis 12, dadurch gekennzeichnet dass, die Zwischenstruktur (24) zumindest ein Verteilungsgehäuse (81) trägt.

14. Mäher nach einem der Ansprüche 1 bis 13, dadurch gekennzeichnet, dass der Rahmen (63) jeder Mäheinheit (25 ; 26) oder jeder Mäh- und Aufbereitungseinheit (25, 38) und (26, 38) im Wesentlichen aus einer Mehrheit von Längsträgern (36, 64, 65) gebildet ist, deren entsprechenden Abstand mittels zumindest einer Seitenwand (66, 71) erhalten ist.

15. Mäher nach Anspruch 14, dadurch gekennzeichnet, dass die Seitenwand oder die Seitenwände (66, 71) mit Mitteln (70) an den Längsträgern (36, 64, 65) befestigt sind, so dass die Verbindung demontierbar ist.

16. Mäher nach Anspruch 14 oder 15, dadurch gekennzeichnet, dass die Anzahl der Längsträgern (36, 64, 65) drei ist.

17. Mäher nach einem der Ansprüche 1 bis 16, dadurch gekennzeichnet, dass die Mähorgane (35) jeder Mäheinheit (25 ; 26) mittels zumindest einem Arm (37) an dem entsprechenden Rahmen (63) befestigt sind.

18. Mäher nach einem der Ansprüche 1 bis 17, dadurch gekennzeichnet, dass die Mähorgane (35) jeder Mäheinheit (25 ; 26) derartig an dem entsprechenden Rahmen (63) befestigt sind, dass sie sich auf- und abwärts gegenüber dem genannten Rahmen (63) bewegen können.

19. Mäher nach Anspruch 18, dadurch gekennzeichnet, dass jede Mäheinheit (25 ; 26) eine Mehrheit von Mähorgane (35) aufweist, die sich gemeinsam gegenüber dem entsprechenden Rahmen (63) bewegen können.

20. Mäher nach Anspruch 18 oder 19, dadurch gekennzeichnet, dass die auf- und abwärts Bewegungen der Mähorgane (35) gegenüber dem entsprechenden Rahmen (63) eine schwenkbewegung um eine etwa horizontale, sich quer zur Fahrtrichtung (15) erstreckende Achse (59) ist.

21. Mäher nach einem der Ansprüche 1 bis 20, dadurch gekennzeichnet, dass sein Körper (3) mittels zweier, um eine horizontale sich quer zur Fahrtrichtung (15) errteckende Achse (52) schwenkbaren Rädern (42) auf dem Boden aufliegt.

22. Mäher nach Anspruch 21, dadurch gekennzeichnet, dass sich ein Rad (42) in der Nähe des freien Endes jeder Mäheinheit (25 ; 26) oder jeder Mäh- und Aufbereitungseinheit (25, 38) und (26, 38) erstreckt.

23. Mäher nach Anspruch 21 oder 22, dadurch gekennzeichnet, dass sich der Körper (3) des Mähers auf zumindest einem anderen Rad (109), das sich zwischen den ersten Rädern (42) befindet und gegenüber dem Körper (3) schwenken kann, abstützt.

24. Mäher nach Anspruch 23, dadurch gekennzeichnet, dass das oder die zusätzlichen Räder (109) gegenüber dem Körper (3) gegen ein elastisches Organ (118) schwenken können.

25. Mäher nach Anspruch 23 oder 24, dadurch gekennzeichnet, dass das oder die zusätzlichen Räder (109) an der Zwischenstruktur (24) befestigt sind.

26. Mäher nach Anspruch 21 oder 22 und Anspruch 23, 24 oder 25, dadurch gekennzeichnet, dass das oder die zusätzlichen Räder (109) um eine Achse (112) schwenken, die sich etwa mit der Achse (52) um welche die erste Räder (42) schwenken, vereinigt.

27. Mäher nach Anspruch 26, dadurch gekennzeichnet, dass die Schwenkung der Räder (42) um die Achse (52) und des oder der Räder (109) um die Achse (112) durch Zylindern (53, 55) und (113, 115) veranlasst ist.

28. Mäher nach einem der Ansprüche 1 bis 27, dadurch gekennzeichnet, dass die Zwischenstruktur (24) im wesentlichen aus einer gewissen Anzahl von Streben (28, 81, 101, 102) besteht.

29. Mäher nach einem der Ansprüche 9 bis 12 und/oder Anspruch 13, und Anspruch 28, dadurch gekennzeichnet dass das Eingangsgehäuse (75) und/oder das Verteilungsgehäuse (81) als Streben der Zwischenstruktur (24) dienen.

30. Mäher nach einem der Ansprüche 28 oder 29, dadurch gekennzeichnet, dass der Abstand zwischen den Streben (28, 81, 101, 102) mittels zumindest einer Seitenwand (103, 104) erhalten ist.

31. Mäher nach Anspruch 30, dadurch gekennzeichnet, dass die Seitenwand oder die Seitenwände (103, 104) mit Mitteln (105) an den Streben (28, 81, 101, 102) befestigt sind, so dass die Verbindung demontierbar ist.

32. Mäher nach einem der Ansprüche 1 bis 31, dadurch gekennzeichnet, dass sich die Antriebsmitteln (81, 87) der Mähorgane (35) und/oder der Aufbereitungsorgane (38) mit den Mäheinheiten (25 ; 26) und/oder der Mäh- und Aufbereitungseinheiten (25, 38) und (26, 38) während der Montage dieser Mäheinheiten (25 ; 26) oder dieser Mäh- und Aufbereitungseinheiten (25, 38) und (26, 38) auf die Zwischenstruktur (24), verkuppeln.

33. Mäher nach Anspruch 32, dadurch gekennzeichnet, dass die Zwischenstruktur zumindest ein Teil der Antriebsmitteln (81, 87) trägt.

34. Mäher nach Anspruch 33, dadurch gekennzeichnet, dass die Antriebsmitteln (87) der Aufbereitungsorgane (38) aus einer Welle (87), deren zwei Ende aus den Seitenwänden der Zwischenstruktur (24) herauskommen, gebildet sind.

35. Mäher nach Anspruch 33, dadurch gekennzeichnet, dass die Antriebsmitteln (81) der Mähorgane (35) ein Verteilung gehäuse (81) aufweisen, in welches eine Welle (82) eindrängt, die aus der Seitenwand (71) der entsprechenden Mäheinheit (25 ; 26) oder der entsprechenden Mäh- und Aufbereitungseinheit (25, 38) und (26, 38) herauskommt.

36. Mäher nach Ansprüche 9 und 13, dadurch gekennzeichnet, dass das Verteilungsgehäuse (81) niedriger als das Eingangsgehäuse (75) liegt, und dass beide Gehäuse mittels Antriebsübertragunsmitteln (79) verbunden sind.

37. Mäher nach Anspruch 36, dadurch gekennzeichnet, dass das Verteilungsgehäuse (81) hinter dem Eingansgehäuse (75) liegt.

38. Mäher nach Ansprüche 9 und 13 oder einem der Ansprüche 36 und 37, dadurch gekennzeichnet, dass das Eingangsgehäuse (75) und das Verteilungsgehäuse (81) mittels einem zwischenrohr (83) starr verbunden sind.

39. Mäher nach Anspruch 38, dadurch gekennzeichnet, dass sich die Antriebsübertragungsmitteln (79) in dem Zwischenrohr (83) ertrecken.

40. Mäher nach einem der Ansprüche 1 bis 39, dadurch gekennzeichnet dass jede Mäheinheit (25 ; 26) oder jede Mäh- und Aufbereitungseinheit (25, 38) und (26, 38) mit Schwadmitteln (43, 44) versehen ist, die vorzugs weise um eine stehende Achse (430) verstellbar sind.

## Claims

1. A mower (1) equipped with a body (3) which includes an intermediate structure (24) to which is joined a draw member (4) enabling the mower (1) to be joined to a tractor (2), two mower groups (25 ; 26) each of which includes a frame (63) attached in a dismountable manner to the intermediate structure (24) so that, seen in plan, one mower group (25) extends from one side of the intermediate structure (24) and the other mower group (26) extends from the other side of the said intermediate structure (24), and driving means (26, 6, 18, 21, 22, 76, 74, 75, 78, 79, 80, 81, 82, 96) which drive the mower groups (25 ; 26), characterized by the fact that the mower groups (25 ; 26) extend in the vicinity of one another and cut at least adjacent bands of products to be harvested, and that the frames (63) of the mower groups (25 ; 26) are rigid and are attached rigidly to the intermediate structure (24).

2. A mower as in Claim 1, characterized by the fact that the mower groups (25 ; 26) include in addition conditioner members (38, 72, 73) likewise driven by the said driving means (20, 6, 18, 21, 22, 76, 74, 75, 78, 79, 80, 81, 82, 96).

3. A mower as in Claim 1 or 2, characterized by the fact that the first mower group (25) or the first mowerconditioner group (25, 38) has the same length as the second mower group (26) or respectively the second mower-conditioner group (26, 38).

4. A mower as in Claim 1 or 2, characterized by the fact that the first mower group (25) or the first mowerconditioner group (25, 38) has a different length from the second mower group (26) or respectively the second mower-conditioner group (26, 38).

5. A mower as in one of the Claims 1 to 4, characterized by the fact that the intermediate structure (24) has two sidefaces (103, 104) and that the two mower groups (25 ; 26) or the two mower-conditioner groups (25, 38) and (26, 38) extend respectively in the vicinity of one of the said sidefaces (103, 104).

6. A mower as in one of the Claims 1 to 5, characterized by the fact that the draw member (4) is joined to the intermediate structure (24) and can pivot about an axis (27) directed upwards.

7. A mower as in Claim 6, characterized by the fact that the draw member (4) can pivot between at least one working position and a position for transport.

8. A mower as in Claim 6 or 7, characterized by the fact that the draw member (4) can occupy a number of working positions.

9. A mower as in one of the Claims 1 to 8, characterized by the fact that the intermediate structure (24) supports the entrance casing (75).

10. A mower as in Claim 9, characterized by the fact that a universal joint coupling (76) is provided between the entrance casing (75) and the transmission means (22) which transmit the motion from the front of the draw member (4) to the said entrance casing (75) and which consist of at least one shaft (22) housed in the draw member (4).

11. A mower as in Claim 10 and one of the Claims 6 to 8, characterized by the fact that the axis (77) of the universal joint (76) coincides approximately with the axis (27) about which the draw member (4) can pivot.

12. A mower as in Claim 11, characterized by the fact that the universal joint (76) is homokinetic.

13. A mower as in one of the Claims 1 to 12, characterized by the fact that the intermediate structure (24) supports at least one distribution casing (81).

14. A mower as in one of the Claims 1 to 13, characterized by the fact that the frame (63) of each mower group (25 ; 26) or of each mower-conditioner group (25, 38) and (26, 38) is composed essentially of a plurality of stringers (36, 64, 65) the respective distances apart of which are maintained by at least one sidewall (66, 71).

15. A mower as in Claim 14, characterized by the fact that the sidewall or sidewalls (66, 71) are attached to the stringers (36, 64, 65) with the aid of means (70) such that the assembly is dismountable.

16. A mower as in Claim 14 or 15, characterized by the fact that the number of stringers (36, 64, 65) is 3.

17. A mower as in one of the Claims 1 to 16, characterized by the fact that the cutter members (35) of each mower group (25 ; 26) are supported from the respective frame (63) by means of at least one arm (37).

18. A mower as in one of the Claims 1 to 17, characterized by the fact that the cutter members (35) of each mower group (25 ; 26) are supported from the respective frame (63) so as to be able to be moved upwards and downwards with respect to the said frame (63).

19. A mower as in Claim 18, characterized by the fact that each mower group (25 ; 26) includes a plurality of cutter members (35) which may be moved conjointly with respect to the respective frame (63).

20. A mower as in Claim 18 or 19, characterized by the fact that the movement of the cutter members (35) upwards and downwards with respect to the respective frame (63) is a pivoting movement about an approximately horizontal axis (59) extending transversely to the direction (15) of advance.

21. A mower as in one of the Claims 1 to 20, characterized by the fact that its body (3) rests on the ground by means of two wheels (42) which can pivot about a horizontal axis (52) extending transversely to the direction (15) of advance.

22. A mower as in Claim 21, characterized by the fact that one wheel (42) extends near the free end of each mower group (25 ; 26) or of each mower-conditioner group (25, 38) and (26, 38).

23. A mower as in Claim 21 or 22, characterized by the fact that the body (3) of the mower bears on at least one other wheel (109) which is located between the first wheels (42) and can pivot with respect to the body (3).

24. A mower as in Claim 23, characterized by the fact that the supplementary wheel or wheels (109) can pivot with respect to the body (3) against an elastic member (118).

25. A mower as in Claim 23 or 24, characterized by the fact that the supplementary wheel or wheels (109) are attached to the intermediate structure (24).

26. A mower as in Claim 21 or 22 and Claim 23, 24 or 25, characterized by the fact that the supplementary wheel or wheels (109) pivot about an axis (112) which coincides approximately with the axis (52) about which the first wheels (42) pivot.

27. A mower as in Claim 26, characterized by the fact that the pivoting of the wheels (42) about the axis (52) and of the wheel or wheels (109) about the axis (112) is caused by jacks (53, 55) and (113, 115).

28. A mower as in one of the Claims 1 to 27, characterized by the fact that the intermediate structure (24) is composed essentially of a certain number of crosspieces (28, 81, 101, 102).

29. A mower as in one of the Claims 9 to 12 and/or Claim 13, and Claim 28, characterized by the fact that the entrance casing (75) and/or the distribution casing (81) constitute crosspieces of the intermediate structure (24).

30. A mower as in one of the Claims 28 or 29, characterized by the fact that the distance between the crosspieces (28, 81, 101, 102) is maintained by at least one sideplate (103, 104).

31. A mower as in Claim 30, characterized by the fact that the sideplate or sideplates (103, 104) are attached to the crosspieces (28, 81, 101, 102) with the aid of means (105) such that the assembly is dismountable.

32. A mower as in one of the Claims 1 to 31, characterized by the fact that the driving means (81, 87) of the cutter members (35) and/or of the conditioner members (38) are coupled with the mower groups (25 ; 26) and/or the mower-conditioner groups (25, 38) and (26, 38) at the time of assembly of the said mower groups (25 ; 26) or of the said mower-conditioner groups (25, 38) and (26, 38) onto the intermediate structure (24).

33. A mower as in Claim 32, characterized by the fact that the intermediate structure supports at least one portion of the said driving means (81, 87).

34. A mower as in Claim 33, characterized by the fact that the driving means (87) of the conditioner members (38) consist of a shaft (87) the two ends of which extend from the sidefaces of the intermediate structure (24).

35. A mower as in Claim 33, characterized by the fact that the driving means (81) of the cutter members (35) include a distribution casing (81) into which penetrates a shaft (82) which extends from the sidewall (71) of the corresponding mower group (25 ; 26) or of the corresponding mower-conditioner group (25, 38) and (26, 38).

36. A mower as in Claims 9 and 13, characterized by the fact that the distribution casing (81) is located lower than the entrance casing (75), the two casings being connected by transmission means (79).

37. A mower as in Claim 36, characterized by the fact that the distribution casing (81) is located further back than the entrance casing (75).

38. A mower as in Claims 9 and 13 or one of the Claims 36 and 37, characterized by the fact that the entrance casing (75) and the distribution casing (81) are tied rigidly by means of a tubular crosspiece (83).

39. A mower as in Claim 38, characterized by the fact that the transmission means (79) extend inside the tubular crosspiece (83).

40. A mower as in one of the Claims 1 to 39, characterized by the fact that each mower group (25 ; 26) or each mower-conditioner group (25, 38) and (26, 38) is equipped with swathing means (43, 44) preferably adjustable about an axis (430) directed upwards.

EP 0 163 587 B1

FIG.1

FIG.2

EP 0 163 587 B1

FIG.7

FIG.3

FIG.5

FIG.8

FIG.9

FIG.4

## FIG.6